**Europäisches Patentamt**

**European Patent Office**

**Office européen des brevets**

(19)

(11) Veröffentlichungsnummer: **0 125 460**
**B1**

(12) # EUROPÄISCHE PATENTSCHRIFT

(45) Veröffentlichungstag der Patentschrift:
**13.01.88**

(21) Anmeldenummer: **84103746.8**

(22) Anmeldetag: **05.04.84**

(51) Int. Cl.⁴: **E 04 D 13/00**, E 04 D 15/00,
G 01 N 27/12, G 01 R 19/04

(54) Verfahren und Vorrichtung zum Orten von Leckstellen in Flachdächern.

(30) Priorität: **19.04.83 DE 3314182**

(43) Veröffentlichungstag der Anmeldung:
**21.11.84 Patentblatt 84/47**

(45) Bekanntmachung des Hinweises auf die Patenterteilung:
**13.01.88 Patentblatt 88/2**

(84) Benannte Vertragsstaaten:
**AT BE CH DE FR GB IT LI LU NL SE**

(56) Entgegenhaltungen:
**DE-A-2 446 979**
**DE-A-2 921 250**
**DE-A-3 011 500**
**US-A-4 110 345**

(73) Patentinhaber: **Geesen, Heinrich, Mootzenstrasse 24, D-2915 Saterland 1 (DE)**

(72) Erfinder: **Geesen, Heinrich, Mootzenstrasse 24, D-2915 Saterland 1 (DE)**

(74) Vertreter: **Jabbusch, Wolfgang, Dr., Elisabethstrasse 6, D-2900 Oldenburg (DE)**

EP 0 125 460 B1

## Beschreibung

Die Erfindung betrifft ein Verfahren und eine Vorrichtung zum Orten von Leckstellen in Flachdächern, insbesondere Flachdächer mit einer Rieslage, Pflanzenbewuchs oder dergleichen.

Flachdächer haben zumeist als Dachhaut sogenannte Dachpappe, die in mehreren Lagen übereinander geklebt und genagelt wird. Zum Schutz gegen Wärme werden diese Dächer oftmals mit einer vor Wärme schützenden Kieslage abgedeckt. Um nun Leckstellen in Flachdächern zu erkennen, wird von den Sachdeckern immer noch eine Sichtprüfung durchgeführt, bei denen die Dachdecker an nach ihren Erfahrungen häufig gefährdeten Stellen zu suchen bzw. zu gucken beginnen. Diese Art Leckstellen aufzuspüren, ist insbesondere bei mit einer Kieslage versehenem Flachdach äußerst schwierig durchzuführen, da die Leckstellen durch die Kieslage verdeckt sind und daher die Kieslage entfernt werden muß. Sind die Leckstellen zudem noch relativ klein, ist oftmals ein tagelanges Suchen selbst bei Flachdächern ohne Kieslage notwendig, um die Leckstelle entdecken zu können.

Der Erfindung liegt die Aufgabe zugrunde, ein Verfahren und eine Vorrichtung zu schaffen, die ein schnelles und einfaches Orten von Leckstellen in Flachdächern ermöglicht.

Diese Aufgabe ist erfindungsgemäß dadurch gelöst worden, daß eine unter dem Flachdach erkannte Feuchtstelle mit dem Pluspol eines Impulsgenerators verbunden wird, daß der Minuspol des Impulsgenerstors mit der metallischen Traufkante des Flachdaches oder mit einem auf dem Flachdach ausgelegten blanken Kabel verbunden wird, und daß zwecks Messung der über den Feuchtweg zur jeweiligen Leckstelle und von der Leckstelle auf das feuchte Flachdach geleiteten Impulse das Flachdach mit Meßfühlern abgetastet wird, die mit einem Meßgerät in Wirkverbindung stehen, das die von der Leckstelle zum Rand des Flachdaches hin geringer werdenden Impulsamplituden mißt.

Mit diesem Verfahren wird der Feuchtwag von der Feucht: stelle zur Leckstelle sowie das Flachdach mit elektrischen Impulsen des Impulsgenerators beaufachlagt. Die Impulse haben an der Leckstelle die größten Impulsamplituden. Zum Rand dea Flachdaches hin nimmt die Größe der Impulsimplituden ab. Somit kann eine Bedienungsperson mit dem die Impulsamplituden messenden Meßgerät das Flachdach mit Meßfühlern abtasten und die zur Leckstelle hin größer werdendan Impulsamplituden messen. Die Bedienungsperson geht in Richtung des größten durch das Meßgerät angezeigten Wertes der Impulsamplituden, so daß die Bedienungsperson praktisch den zur Leckstelle größer werdenden Impulsamplituden folgt, bis die Leckstelle entdeckt ist. Auf diese einfache und vorteilhafte Weise können Lackstellen relativ schnell und einfach entdeckt werden. Durch dieses Verfahren wird der Personalbedarf bei der Leckstellensuche auf ein Minimum reduziert, so daß Dachreparaturen bei Flachdächern wesentlich kostengünstiger durchgeführt werden können.

Ist an Flachdächern keine metallische Traufkante vorhanden, ist erfindungsgemäß vorgesehen, daß der Minuspol des Impulsgenerators mit einem auf dem Flachdach ausgelegten blanken Kabel verbunden wird. Dadurch wird auf einfache Weise der elektrische Kreis vom Plus- zum Minuspol des Impulsgenerators wieder geschlossen, so daß auch Flachdächer ohne metallische Traufkante mit Impulsen beaufschlagt werden können, so daß auch hier ein schnelles Orten von Leckstellen möglich ist.

Die erfindungsgemäß geschaffene Vorrichtung zur Durchführung des vorgenannten Verfahrens zeichnet sich dadurch aus, daß ein Gleichstromimpulse erzeugender Generator angeordnet ist, wobei sein Pluspol mit der unter einem Flachdach erkannten Feuchtstelle und sein Minuspol mit der metallischen Traufkante des Flachdaches oder einem auf dem Flachdach ausgelegten blanken Kabel verbunden ist, und daß ein Meßgerät die über Meßfühler zur Abtastung des Daches dem Meßgerät zugeführten Impulsamplituden miteinander vergleicht und die größere Impulsamplitude über ein mit einer Mittenanzeige ausgerüstetes Zeigeranzeigeinstrument anzeigt. Durch die Mittenanzeige des Zeigeranzeigeinstruments wird durch den Zeiger in etwa die Richtung der zur Leckstelle hin größer werdenden Impulsamplituden angezeigt, so daß eine Bedienungsperson nur der Richtung des Zeigerausschlages zu folgen braucht, bis dieser etwa seine Mittenposition, d. h. seine Nullage einnimmt. Dort befindet sich dann die Leckstelle, da im Leckstellenbereich die Größe der Impulsamplituden in etwa gleich sind und somit dem Meßgerät gleiche Impulsamplituden zugeführt werden, die keinen Ausschlag des Zeigeranzegeinstruments bewirken. Dadurch wird nochmals das Auffinden von Leckstellen in Flachdächern vereinfacht bzw. verbessert.

Eine Weiterbildung der Vorrichtung zeichnet sich dadurch aus, daß die Meßfühler teilweise isolierte Aluminiumstäbe sind, die jeweils mit der Basis zweier in einer Differenzverstärkerschaltung geschalteter Transistoren verbunden sind, und daß die Emitter der beiden Transistoren über das Zeigeranzeigeinstrument miteinander gekoppelt sind. Dadurch werden die von den Meßfühlern aufgenommenen Impulsamplituden, die relativ klein sind, von den Transistoren verstärkt dem Zeigeranzeigeinstrument zugeführt, so daß dieses durch die Differenzverstärkerschaltung der Transistoren immer entsprechend der größeren Impulsamplitude nach links oder rechts ausschlägt oder bei gleichen Impulsamplituden in der Mittenstellung verharrt.

Ein Ausführungsbeispiel der Erfindung, aus dem sich weitere erfinderische Merkmale ergeben, ist in der Zeichnung dargestellt. Es zeigen:

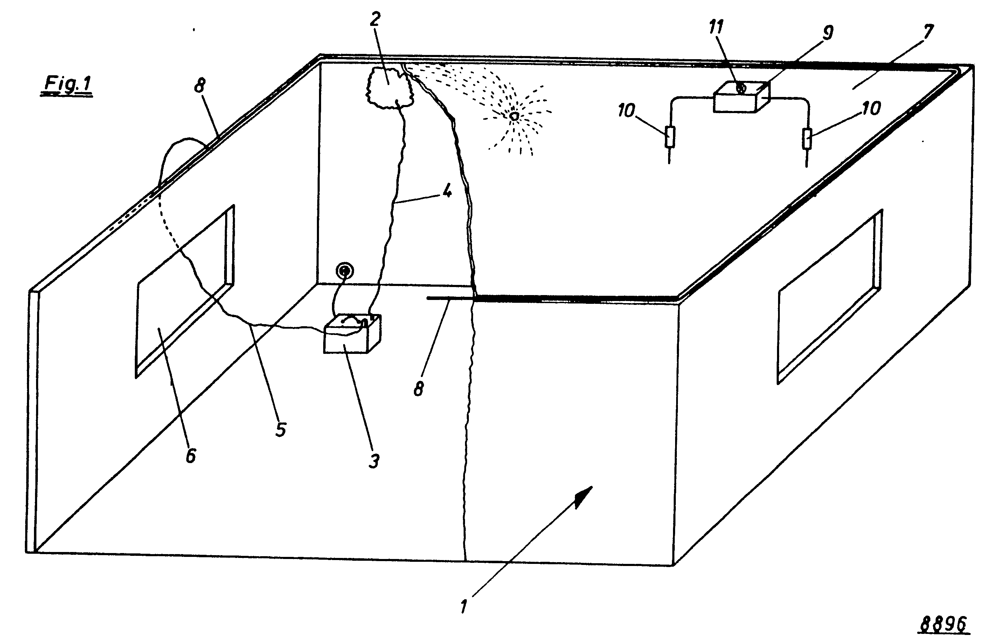

Fig. 1 eine schematische, aufgeschnitten dargestellte, perspektivische Ansicht eines Hauses mit einem Impulsgenerator und einem Meßgerät und

Fig. 2 die Schaltung des Meßgerätes.

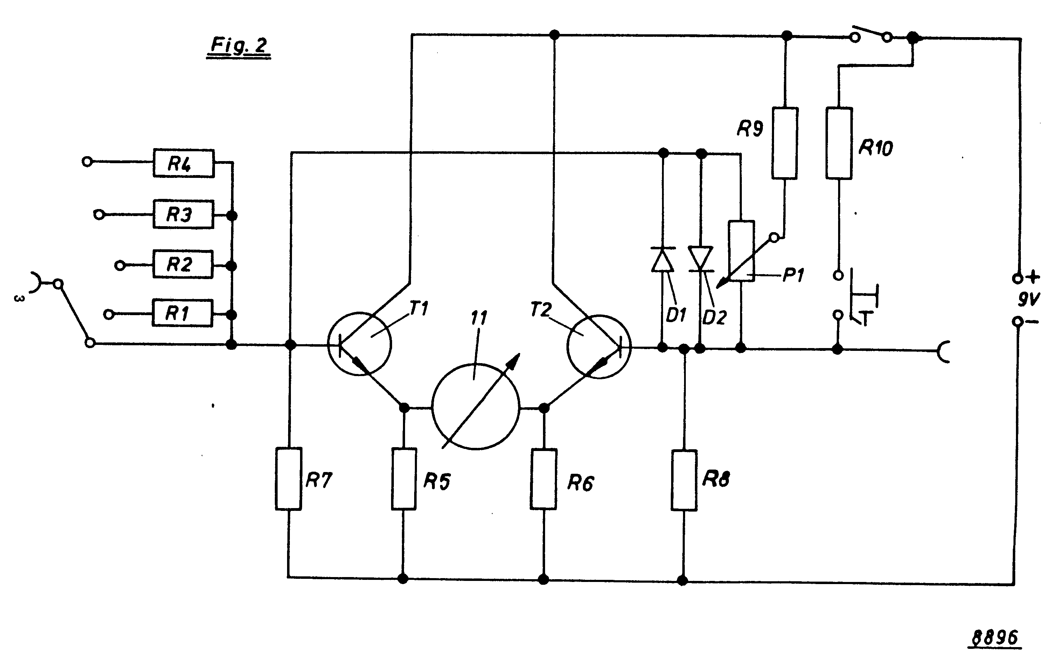

In dem Haus 1 befindet sich eine Feuchtstelle 2, die von in einer Leckstelle im Flachdach 7 eingedrungenen Wasser verursacht wurde. An die Feuchtstelle ist der Impulsgenerator 3 mit seinem Pluspol 4 angeschlossen. Der Minuspol 5 des Impulsgenerators ist durch ein Fenster 6 zum Flachdach 7 geführt und an einem um das Flachdach herumgelegten blanken Kabel 8 angeschlossen. Der Impulsgenerator ist an das Stromnetz des Hauses angeschlossen und sendet bei Einschaltung des Impulsgenerators 3 Gleichstromimpulse aus, die von der Feuchtstelle über den Feuchtweg zur Leckstelle und von dort auf das nasse oder das angefeuchtete Flachdach zum blanken Kabel 8 und somit auch zum Impulsgenerator zurückgelangen, so daß der Stromkreis geschlossen ist. Diese zum Rand des Flachdaches 7 hin schwächer werdenden Impulse bzw. Impulsamplituden können mit dem Meßgerät 9 durch Abtastung des Daches mit Meßfühlern 10 gemessen werden. Das Meßgerät 9 hat ein Zeigeranzeigeinstrument 11, welches eine Mittenanzeige hat. Das Zeigeranzeigeinstrument 11 steht mit einer Schaltung in Wirkverbindung, die in Fig. 2 dargestellt ist und schlägt je nach gemessener Größe der Impulsamplituden nach links oder rechts aus und zeigt jeweils die größte gemessene Impulsamplitude an. Somit ist auch gleichzeitig die Richtung der zur Leckstelle hin stärker werdenden Impulsamplituden angezeigt. Das Zeigeranzeigeinstrument 11 ist mit den Emittern zweier in Differenzverstärkerschaltung geschalteter Transistoren T1, T2 verbunden. Die Basen der beiden Transistoren werden mit den Meßfühlern 10 verbunden. Die von den Meßfühlern aufgenommenen Impulsamplituden werden somit als Eingangssignal den Transistoren T1 und T2 zugeführt, von diesen verstärkt und dem Zeigeranzeigeninstrument im Emitterkreis zugeführt. Das Zeigeranzeigeinstrument 11 mißt den Strom der zusammengeschalteten Emitter der Transistoren T1 und T2 und schlägt somit nach links oder rechts aus, je nachdem von welchem Transistor aus ein stärkerer Strom fließt. Sind beide Ströme gleich, erfolgt kein Ausschlag. Das Zeigeranzeigeinstrument kann bei eingeschalteten Meßgerät über den Kollektorwiderstand R9 und den regelbaren Widerstand P1 auf seine Mittenlage abgeglichen werden. Weiterhin sind im Eingangskreis zwei Dioden D1, D2 angeordnet, die die Transistoren T1 und T2 vor Überspannungen schützen. Außerdem sind Vorschaltwiderstände R1 - R4 im Eingangskreis angeordnet, mit denen die Empfindlichkeit des Meßgerätes eingestellt werden kann. Die Schaltung wird über eine Trockenbatterie mit einer 9-Volt-Gleichspannung gespeist. Zur Überprüfung des Ladezustands der Batterie ist ein Taster T vorgesehen, der über den Widerstand R10 einen Ausschlag das Zeigeranzeigeinstrumentes bei einem guten Ladezustand der Trockenbatterie bewirkt. Die Widerstände R5 und R6 sind die Emitterwiderstände der Transistoren T1 und T2. Über die Widerstände R7, R8 sind die Basen der Transistoren an Masse gelegt, so daß eine symmetrische Ansteuerung der Transiatoren bzw. des Differenzverstärkers erfolgt.

**Patentansprüche**

1. Verfahren zum Orten von Leckstellen in Flachdächern (7), insbesondere Flachdächer mit einer Kieslage, Pflanzenbewuchs oder dergleichen, wobei eine unter dem Flachdach (7) erkannte Feuchtstelle (2) mit dem Pluspol (4) eines Impulsgenerators (3) verbunden wird, der Minuspol (5) des Impulsgenerators mit der metallischen Traufkante des Flachdaches (7) oder mit einem auf dem Flachdach ausgelegten blanken Kabel (8) verbunden wird, und daß zwecks Messung der über den Feuchtweg zur jeweiligen Leckstelle und von der Leckstelle auf das feuchte Flachdach geleiteten Impulse das Flachdach mit Meßfühlern (10) abgetastet wird, die mit einem Meßgerät (9) in Wirkverbindung stehen, das die von der Leckstelle zum Rand des Flachdaches hin geringer wedenden Impulsamplituden mißt.

2. Vorrichtung zur Durchführung des Verfahrens nach Anspruch 1 mit einem Gleichstromimpulse erzeugenden Generator (3), wobei sein Pluspol (4) mit der unter einem Flachdach (7) erkennten Feuchtstelle (2) und sein Minuspol (5) mit der metallischen Traufkante des Flachdaches (7) oder einem auf dem Flachdach ausgelegten blanken Kabel (8) verbunden ist, und mit einem Meßgerät (9), das die über Meßfühler (10) zur Abtastung des Daches dem Meßgerät zugeführten Impulsamplituden miteinander vergleicht und die größere Impulsamplitude über ein mit einer Mittenanzeige ausgerüstetes Zeigeranzeigeinstrument (11) anzeigt.

3. Vorrichtung nach Anspruch 2, daß die Meßfühler (10) teilweise isolierte Aluminiumstäbe sind, die jeweils mit der Basis zweier in einer Differenzverstärkerschaltung geschalteter Transistoren (T1, T2) verbunden sind, und daß die Emittar der beiden Transistoren über das Zeigeranzeigeinstrument (11) miteinander gekoppelt sind.

**Claims**

1. A method and device for locating leaks in flat roofs (7), more particularly flat roofs with a layer of gravel, plant growth or the like, a moist spot (2) identified under the flat roof being connected to the positive pole (4) of the pulse generator, the negative pole (5) of the pulse generator being connected to the metal eaves of the flat roof (7) or to a bare cable (8) laid on the flat roof, and that for the purpose of measuring the pulses conducted via the damp course to the respective leak and from the leak onto the moist flat roof, the flat roof is scanned with measuring sensors (10), which are operatively connected to a measuring instrument (9), which measures the pulse amplitudes which decrease from the point of the leak towards the edge of the flat roof.

2. A device for carrying out the method according to claim 1 with a generator (3) generating direct current pulses, its positive pole (4) being connected to an identified moist spot (2) under a flat roof (7) and its negative pole (5) being connected to the metal eaves of the flat roof (7) or a bare cable (8) laid on the flat roof, and with a measuring instrument (9), which compares pulse amplitudes fed to the measuring instrument for scanning the roof with one another and indicates the greater pulse amplitude via a display instrument (11) with a pointer fitted with a central display.

3. A device according to claim 2, that the measuring sensors (10) are partially insulated aluminium rods, which are respectively connected to the base of two transistors (T1, T2) connected in a sum-and-difference amplifier circuit, and that the emitters of both transistors are interconnected via the indicator instrument (11) with the pointer.

## Revendications

1. Procédé pour localiser des fuites dans des toits plats (7), en particulier dans des toits plats avec une couche de gravier, des plantations ou des éléments comparables, selon lequel une zone d'humidité (2) observée sous le toit plat (7) est raccordée au pôle positif (4) d'un générateur d'impulsions (3), le pôle négatif (5) du générateur d'impulsions étant raccordé au bord de gouttière métallique du toit plat (7) ou à un câble nu (8) étendu sur le toit plat et selon lequel, pour la mesure des impulsions transmises par le parcours d'humidité jusqu'à la fuite et de la fuite au toit plat humide, le toit plat est exploré par des capteurs de mesure (10) qui coopèrent avec un appareil de mesure (9) mesurant les amplitudes d'impulsions qui diminuent depuis la fuite jusqu'au bord du toit plat.

2. Dispositif pour l'exécution du procédé selon la revendication 1 avec un générateur (3) produisant des impulsions de courant continu selon lequel son pôle positif (4) est raccordé à la zone humide (2) et son pôle négatif (5) est raccordé au bord de gouttière métallique du toit plat (7) ou à un câble nu (8) étendu sur le toit plat, et avec un appareil de mesure (9) qui compare les amplitudes d'impulsions établies par des capteurs de mesure (10) pour l'exploration du toit et qui indique l'amplitude d'impulsion plus grande par un indicateur à index (11) équipé d'un index de moyenne.

3. Dispositif selon la revendication 2, dans lequel les capteurs de mesure (10) sont des tiges d'aluminium partiellement isolées qui sont raccordées à la base de deux transistors (T1, T2) branchés dans un montage d'amplificateur de tension différentielle tandis que les émetteurs des deux transistors sont accouplés l'un à l'autre par l'indicateur à index (11).

Fig.1

Fig. 2

0 125 460

8896